# EUROPÄISCHE PATENTSCHRIFT

(11) **EP 0 551 538 B1**
(45) Veröffentlichungstag und Bekanntmachung des Hinweises auf die Patenterteilung: **10.04.1996**
(21) Anmeldenummer: 92100530.2
(22) Anmeldetag: 14.01.1992
(51) Int. Cl.: H03F 3/70, G06G 7/186

(54) **Ladungsverstärker**
Charge amplifier
Amplificateur de charge

(43) Veröffentlichungstag der Anmeldung: 21.07.1993
(73) Patentinhaber: SIEMENS AKTIENGESELLSCHAFT, D-80333 München (DE)
(72) Erfinder: Wohlstreicher, Franz, Dipl.-Ing. (FH), W-8396 Wegscheid (DE)

(56) Entgegenhaltungen:
- EP-A- 0 253 016
- US-A- 4 398 104
- US-A- 4 543 536
- I.E.E. PROCEEDINGS SECTIONS A a I Band 130, Nr. 3, Teil G, Juni 1983, Seiten 94-96, Old Woking, GB; DINIZ et al.: "High-performance integrators and applications in 2-integrator loop biquads"
- MEASUREMENT TECHNIQUES Band 28, August 1985, Seiten 755,756, New York, US; ANSO: "Differentiating Integrators with Automatic Compensation of DC Input-Current Component"
- PATENT ABSTRACTS OF JAPAN Band 1, Nr. 152 (E-77)(7950), 7. Dezember 1977; & JP - A - 5292460 (YOKOGAWA DENKI SEISA KUSHO) 08.03.1977

## Beschreibung

Die Erfindung betrifft einen Ladungsverstärker nach dem Oberbegriff von Anspruch 1.

Die Messung des Brennraumdruckverlaufs in Brennkraftmaschinen bietet u.a. die Möglichkeit der zylinderselektiven Erkennung von fehlerhaften Verbrennungsvorgängen, beispielsweise von Zündaussetzern und Motorklopfen. Dazu dienen piezokeramische Sensoren, welche zwischen Zündkerze und Zylinderkopf montiert oder in einer Indizierbohrung des Zylinderkopfes befestigt, dem Brennraumdruck direkt ausgesetzt werden. Diese Sensoren geben ein dem Druckverlauf im Zylinder proportionales Ladungssignal ab.

Das vom Sensor gelieferte Ladungssignal wird mittels eines Ladungsverstärkers verstärkt und in ein Spannungssignal gewandelt. Ein Ladungsverstärker stellt im Idealfall einen Stromintegrator dar.

Piezokeramische und andere, elektrische Ladung abgebende Sensoren haben Eigenschaften, welche die Proportionalität zwischen Meßgröße (Brennraumdruck) und Sensorsignal beeinträchtigen. Die vom Sensor verursachte Drift des Ladungssignals über der Temperatur - z.B. hervorgerufen durch plötzlichen Lastwechsel der Brennkraftmaschine - sorgt für eine starke Einschränkung des Nutzsignalbereiches innerhalb des Versorgungsspannungsbereiches. Außerdem führt der Stromfrequenzgang (Störfrequenzgang) des Ladungsverstärkers zu einem hohen Gleichanteil im Ausgangssignal (Hysterese der temperaturbedingten Signaldrift).

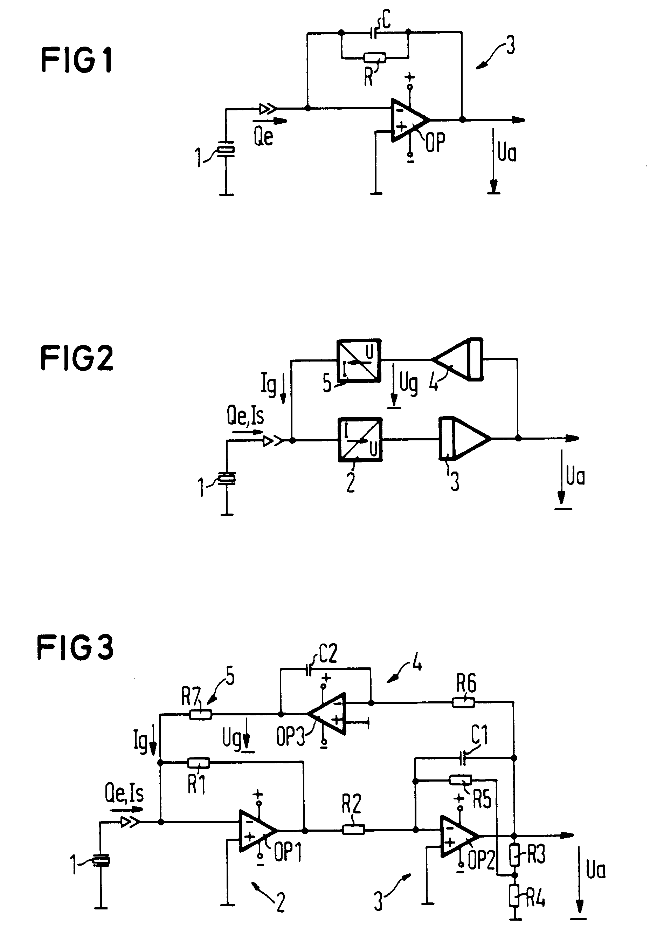

Bekannte Ladungsverstärker (Figur 1) werden in der Praxis mit einem zum Integrationskondensator parallel geschalteten Widerstand betrieben. Durch den sich daraus ergebenden Hochpaß 1. Ordnung im Ladungsfrequenzgang wird verhindert, daß der Ladungsverstärker wegen ständig integrierter Leckströme innerhalb kurzer Zeit in die Sättigung läuft. Ein Beispiel für einen solchen Verstärker zeigt US-A-4 543 536.

Der Stromfrequenzgang (Störfrequenzgang) entspricht einem Tiefpaß 1. Ordnung, wodurch Temperaturfehler überhaupt nicht gedämpft werden.

Außerdem neigen diese bekannten Ladungsverstärker in vielen Fällen zum Schwingen.

Aufgabe der Erfindung ist es demgegenüber, einen Ladungsverstärker zu schaffen, bei dem die Temperaturdrift sowie die Hysterese wesentlich geringer sind und der nicht zum Schwingen neigt.

Diese Aufgabe wird erfindungsgemäß durch die im kennzeichnenden Teil von Anspruch 1 genannten Merkmale gelöst.

Die daraus resultierende Schaltungsstruktur (Figur 2) ergibt eine Aufteilung in einen stabilen Strom/Spannungs-Wandler, der vorteilhafterweise als Stromverstärker ausgeführt ist, und in einen Spannungsintegrator, bei dem der an einen Ausgangsspannungsteiler angeschlossene Parallelwiderstand zum Integrationskondensator einen relativ niedrigen Wert haben kann, was eine ständige Forderung bei der Verwendung in Kraftfahrzeugen ist (Integrationsfähigkeit, Leckströme).

Die Schaltung liefert darüber hinaus große Vorteile in der Signalverarbeitung. Der Integrator im Gegenkopplungszweig führt zu einem Ladungsfrequenzgang, der einen Hochpaß 2. Ordnung darstellt. Temperaturgradientenfehler des Sensors werden doppelt so gut unterdrückt wie beim bekannten Ladungsverstärker, ebenso andere temperaturbedingte Effekte. Die Drift der Ausgangsspannung bei Lastwechsel ist nur noch halb so groß.

Der Stromfrequenzgang weist Bandpaßverhalten auf, wodurch die Hysterese-Fehler vollkommen unterdrückt werden. Damit zeigt der Sensor scheinbar keinen Hystereseeffekt des bei Lastwechsel driftenden Ausgangssignals mehr.

Darüber hinaus ist es bei dieser Schaltung möglich, wesentlich kleinere Kondensatoren für beide Integratoren zu verwenden. Kleine Kapazitätswerte stellen geringere Ansprüche an die Ausgangsstufe des Ladungsverstärkers, da dieser dann keinen großen Ladestrom liefern muß. Keramikkondensatoren mit kleinen Kapazitätswerten sind mit sehr geringen Toleranzen (1%) erhältlich, wodurch der Einsatz des Ladungsverstärkers bei in Kraftfahrzeugen auftretenden höheren Temperaturen möglich wird, im Gegensatz zu Folienkondensatoren, welche für höhere Temperaturbereiche nur mit wesentlich größeren Toleranzen erhältlich sind. Kleine Toleranzen sind aber wichtig, da der Kapazitätswert direkt die Größe der Ausgangsspannung bestimmt.

Die Notwendigkeit großer Kapazitätswerte bei herkömmlichen Ladungsverstärkern macht deren Einsatz in Kraftfahrzeugen bei hohen Temperaturen demnach nahezu unmöglich.

Nachfolgend wird die Erfindung anhand eines Ausführungsbeispiels näher erläutert. Es zeigen:
- Figur 1: eine Schaltung eines bekannten Ladungsverstärkers,
- Figur 2: ein Prinzipschaltbild der Schaltungsanordnung eines erfindungsgemäßen Ladungsverstärkers und
- Figur 3: ein prinzipielles Ausführungsbeispiel eines erfindungsgemäßen Ladungsverstärkers.

Figur 1 zeigt die Schaltung eines bekannten Ladungsverstärkers in diskreter Technik, bestehend aus einem als Integrator 3 beschalteten Operationsverstärker OP, dessen Integrationskondensator C ein Widerstand R parallel geschaltet ist und der die Funktion eines Stromintegrators mit Ladungsverstärkung erfüllt. Seine Vor- und Nachteile wurden bereits weiter oben genannt. Dieser Ladungsverstärker wandelt das von einem piezokeramischen Sensor 1 erhaltene Ladungssignal Qe in ein möglichst proportionales Ausgangssignal Ua um.

Figur 2 zeigt ein Prinzipschaltbild eines erfindungsgemäßen Ladungsverstärkers. Dieses Schaltbild zeigt die einzelnen Funktionen auf und ist deshalb von Vorteil, da sich Ausführungsbeispiele in unterschiedlichen Techniken, beispielsweise eine integrierte Lösung, in der Ausführung der einzelnen Funktionsblöcke erheblich von dem in Figur 3 dargestellten, in diskreter Technik ausgeführten Ausführungsbeispiel unterscheiden können.

Das Ausgangssignal des piezokeramischen Sensors 1, die Ladung Qe, bzw. der Sensorstrom Is, wird in einem Strom/Spannungs-Wandler 2 in ein Spannungssignal gewandelt und dieses in einem nachfolgenden Spannungsintegrator 3 zum Ausgangssignal Ua gewandelt. Dieses Ausgangssignal Ua wird vom Ausgang des Spannungsintegrators 3 über einen Integrator 4 und einen Spannungs/Strom-Wandler 5 zum Eingang des Strom/Spannungs-Wandlers gegengekoppelt. Die Wirkungsweise und die Vorteile dieser prinzipiellen Schaltung wurden ebenfalls bereits weiter oben ausführlich erläutert.

Figur 3 schließlich zeigt ein Ausführungsbeispiel eines erfindungsgemäßen Ladungsverstarkers entsprechend dem Prinzipschaltbild in Figur 2, jedoch in diskreter Technik, ausgeführt mit Operationsverstärkern.

In dieser Ausführung ist der Strom/Spannungs-Wandler 2 als Stromverstärker aus einem mit einem Widerstand R1 beschalteten Operationsverstärker OP1 ausgebildet, welcher das Eingangssignal Qe bzw. Is des piezokeramischen Sensors 1 in ein Spannungssignal wandelt, welches von dem nachfolgenden Spannungsintegrator 3, bestehend aus einem Operationsverstärker OP2, beschaltet mit einem Eingangswiderstand R2 und einem gegengekoppelten Integrationskondensator C1 mit einem diesem über einen Ausgangsspannungsteiler R3, R4 parallel geschalteten Widerstand R5, zum Ausgangssignal Ua integriert wird. Dieses Signal wird anschließend in nicht dargestellter Weise z.B. zu Druck- und/oder Klopfsignalen weiterverarbeitet.

Im Gegenkopplungszweig wird das Ausgangssignal Ua über einen weiteren Spannungsintegrator 4, bestehend aus einem mit einem Eingangswiderstand R6 und einem Integrationskondensator C2 - diesmal ohne Parallelwiderstand - beschalteten Operationsverstärker OP3, zu einem Spannungssignal Ug integriert und dieses dann über einen durch einen Widerstand R7 gebildeten Spannungs/Strom-Wandler 5 in ein Stromsignal Ig gewandelt, welches dem Ausgangssignal Is des Sensors 1 überlagert wird.

Vorteilhafterweise kann der Spannungs/Strom-Wandler -Wandler 5 (=R7) nach Figur 2 oder 3 als gesteuerte bipolare Stromquelle zwischen den Versorgungsanschlüssen und dem Eingang des Strom/Spannungs-Wandlers 2 ausgeführt sein, welche vom Ausgangssignal Ug des Gegenkopplungsintegrators 4 gesteuert wird.

Dies ist insbesondere dann von Vorteil, wenn die Schaltung in integrierter Technik ausgeführt werden soll, da die gesamte Schaltung mit Ausnahme der beiden Kondensatoren C1 und C2 integrierbar ist. Für diesen Fall ist auch der Gegenkopplungsintegrator 4 einschließlich des Widerstandes R6, welcher, wie auch der Widerstand R7, in diskreter Technik relativ hochohmig ist, mit Stromquellenschaltungen realisierbar, so daß diese beiden Widerstände nicht hochohmig integriert realisiert werden müssen.

## Patentansprüche

1. Ladungsverstärker für elektrische Ladung abgebende Sensoren (1), insbesondere für piezokeramische Drucksensoren, mit einem Integrator (3), dessen Integrationskondensator (C) ein Widerstand (R) parallel geschaltet ist,
**dadurch gekennzeichnet**,
- daß der Integrator als Spannungsintegrator (3) ausgebildet ist,
- daß dem Spannungsintegrator ein Strom-Spannungswandler (2) vorgeschaltet ist der als Eingang das Sensorsignal erhält, und
- daß zwischen den Ausgang des Spannungsintegrators (3) und den Eingang des Strom/Spannungs-Wandlers (2) ein Gegenkopplungszweig, bestehend aus der Reihenschaltung eines weiteren Spannungsintegrators (4) und eines weiteren Spannungs/Strom-Wandlers (5) geschaltet ist.

2. Ladungsverstärker nach Anspruch 1,
**dadurch gekennzeichnet**,
daß der Strom/Spannungs-Wandler (2) als Stromverstärker geschaltet ist.

3. Ladungsverstärker nach Anspruch 1,
**dadurch gekennzeichnet**,
daß der dem Integrationskondensator (C1) parallel geschaltete Widerstand (RS) den Abgriff eines zwischen dem Ausgang des Spannungsintegrators (3) und dem Bezugspotential der Spannungsversorgung vorgesehenen Spannungsteilers (R3, R4) mit dem Eingang des Spannungsintegrators (3) verbindet.

4. Ladungsverstärker nach Anspruch 1,
**dadurch gekennzeichnet**,
daß der Spannungs/Strom-Wandler (5) ein Widerstand (R7) ist.

5. Ladungsverstärker nach Anspruch 1,
**dadurch gekennzeichnet**,
daß der Spannungs/Strom-Wandler (5) als gesteuerte Stromquelle ausgebildet ist.

## Claims

1. Charge amplifier for sensors (1) which emit electrical charge, preferably for piezoceramic pressure sensors, having an integrator (3) whose integration capacitor (C) has a resistor (R) connected in parallel with it,
characterized
- in that the integrator is designed as a voltage integrator (3),
- in that a current/voltage converter is connected upstream of the voltage integrator and receives the transmitter signal as an input, and
- in that a negative-feedback path is connected between the output of the voltage integrator (3) and the input of the current/voltage converter (2) and comprises the series circuit formed by a further voltage integrator (4) and a further voltage/current converter (5).

2. Charge amplifier according to Claim 1, characterized in that the current/voltage converter (2) is connected as a current amplifier.

3. Charge amplifier according to Claim 1, characterized in that the resistor (R5) which is connected in parallel with the integration capacitor (C1) connects the pick-off of a voltage divider (R3, R4), which is provided between the output of the voltage integrator (3) and the reference-earth potential of the voltage supply, to the input of the voltage integrator (3).

4. Charge amplifier according to Claim 1, characterized in that the voltage/current converter (5) is a resistor (R7).

5. Charge amplifier according to Claim 1, characterized in that the voltage/current converter (5) is designed as a controlled current source.

## Revendications

1. Amplificateur de charge pour capteur délivrant une charge électrique (1) en particulier pour capteur de pression piézocéramique, comportant un intégrateur (3), dont un condensateur d'intégration (C) est connecté en parallèle à une résistance (R),
caractérisé en ce que
l'intégrateur est réalisé sous la forme d'un intégrateur de tension (3),
un convertisseur courant/tension (2) est relié à l'intégrateur de tension qui reçoit en entrée le signal de capteur et
une branche de contre-réaction, constituée du montage en série d'un intégrateur de tension (4) additionnel et d'un convertisseur de tension/courant (5) est connectée entre la sortie de l'intégrateur de tension (3) et l'entrée du convertisseur de courant/tension (2).

2. Amplificateur de charge selon la revendication 1,
caractérisé en ce que le convertisseur courant/tension (2) est monté comme un amplificateur de courant.

3. Amplificateur de charge selon la revendication 1,
caractérisé en ce que la résistance (R5), connectée en parallèle au condensateur d'intégration (C1) relie la prise d'un diviseur de tension (R3, R4), prévu entre la sortie de l'intégrateur de tension (3) et le potentiel de référence de l'alimentation en tension, à l'entrée de l'intégrateur de tension (3).

4. Amplificateur de charge selon la revendication 1,
caractérisé en ce que le convertisseur tension/ courant (5) est une résistance (R7).

5. Amplificateur de charge selon la revendication 1,
caractérisé en ce que le convertisseur tension/ courant (5) est réalisé sous la forme d'une source de courant commandée.
